# EUROPEAN PATENT APPLICATION

(11) **EP 1 708 072 A1**
(43) Date of publication of application: **04.10.2006**
(21) Application number: 05425188.9
(22) Date of filing: 31.03.2005
(51) Int. Cl.: G06F 1/16, F16M 11/10, F16M 11/12

(54) **A support device for a flat screen**

(71) Applicant: Euro Elettronica Srl., 42100 Reggio Emilia (IT)
(72) Inventor: Magnani, Giuliano, 42025 Cavriago (RE) (IT); Paganuzzi, Valerio, 42015 Correggio (RE) (IT); Bonardi, Alex, 42100 Reggio Emilia (IT)
(74) Representative: Gotra, Stefano

(57) **Abstract**

A flat screen (2) defines a plane A-A exhibiting a hinge element (3) connected on a back of the screen by known connection means (4). A support base (10) is connected to the hinge (3) in order to be able to position the screen (2) in a raised position with respect to a floor surface. The hinge (3) exhibits, opposite to the side connected to the screen (2), a surface (5) which is inclined with respect to the plane (A-A) and a first pivot (14) defining an axis (x-x) about which the screen (2) rotates. A rest element (7) is connected to the hinge element (3), which rest element (7) has a curved surface (8) in contact with the inclined surface (5) and which is free to rotate in order to transmit a rotation to the screen (2) about the axis (x-x).

## Description

Recent progress in hi-tech has led to the production of flat screens, i.e. thin screens with a shallower depth than prior-art screens.

The screens were originally intended for use with computers, but have also begun replacing known-type cathode ray television screens.

The main reason for this market tendency is the reduced encumbrance of this type of screen, which are plasma or liquid crystal-type displays.

Best picture resolution, with this type of screen, is obtained by the viewer's positioning him or herself frontally of the screen, with a perpendicular-directed view thereof.

To achieve this directly-frontal view, adjusting devices have been developed which regulate both height and inclination of the screen in order to enable customisation of the screen location on the basis of the viewer's needs.

In the case of use of a personal computer screen, these devices, in a prior-art realisation, are equipped with a hinged arm which inferiorly terminates in a rest base, to be place on a table, and is superiorly equipped with a fork exhibiting a pair of arms which are joined together with a pivot, which is rotatably coupled to a bracket connected behind the screen.

The bracket, which is open-ring-shaped to envelop the pivot, allows a rotation of the screen with respect to a median horizontal axis thereof.

With the use of one or more joints, the computer screen can be height-adjusted and inclined so that the seated operator can view the screen from a perpendicular angle thereto, and looking towards the centre of the screen.

It is evident that in order to prevent any possible tipping-over of the screen, the support system described above has to be adequately weighted near the bottom.

The limited range of screens available for computers, usually of dimensions of between 15 and 21 inches, with weights that rarely exceed 6 kilograms, means that the question of weighting the bases has never really been viewed as a problem.

The range of tv screens of between 15 and 60 inches, and weights that can reach 60 kilograms, as in the cited prior art, means that the problem of providing different types of weighting, integrated with the screens in relation to the weights thereof, is a reality.

The design choice of the articulated arms is to be related not only to the weights it has to support but also to the frequency of the adjustment of the position of the computer screen.

This is because computer screens are often located on a work table and the operator uses the computer from a seated position.

Obviously the computer screen, once the positioning activity has been completed, is rarely moved thereafter.

The use of tv screens, however, is different, as they are usually located in living rooms, where the operator can choose between different postures, for example, standing, seated on an easy chair, or stretched out on a divan.

Clearly, given such a situation, the need to adjust the screen is greater for televisions in comparison to computers.

It is thus evident that the amount of trial-and-error design time for a computer screen adjustment device is much less than for a television screen adjustment device.

A further drawback in the prior art is the click-adjustment of the screen position due to the friction between the bracket and the pivot of the fork.

The main aim of the present invention is to provide a device for moving a flat screen which can be adapted for any type of screen, regardless of the weight thereof, and which is constantly reliable over time.

A second aim of the invention is to provide a device for moving a flat screen which moves gently and continuously.

A further aim of the present invention is to provide a device for moving a flat screen which exhibits a small number of components and which functions by exploiting the lever principle.

A further aim of the invention is to provide a device for moving a flat screen which is able to support various screen adjustment cycles, i.e. which is not particularly subject to wear.

A further aim of the present invention is to provide an exceptionally easy integration of the device for moving the screen with a motorised system for movement thereof, without having to touch the screen itself.

These aims and advantages and more besides are all attained by the invention as it is characterised in the accompany claims.

Further characteristics and advantages of the present invention will better appear from the detailed description that follows of a preferred but non-exclusive embodiment of the invention, illustrated purely by way of a nonlimiting example in the accompanying figures of the drawings, in which:

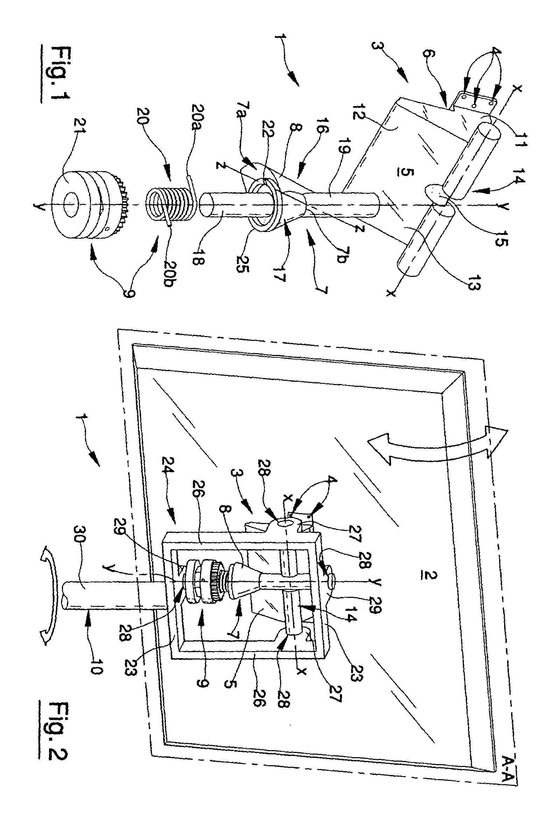

Figure 1 is a schematic representation of a device for moving a flat screen in a front exploded view;
Figure 2 is a perspective view from below of the invention, associated to a flat screen;
Figures 3 and 4 are lateral views of the device for moving a flat screen during operation thereof.

With reference to the figures of the drawings, 1 denotes in its entirety a support device for a flat screen.

The device 1 is associated to a back of a flat screen 2, defining a plane A-A.

The device is defined by a hinge element 3, connected at the back of the screen 2 by known connection means 4, by a rest element 7 meeting the hinge element 3, and by elastic means 9 acting on the rest element 7.

The hinge element 3 oscillates on a support base 10, which support base rests on a surface.

The hinge element 3 is located oppositely to the connection side to the screen 2, and is conformed as a prism-shaped body 11 which on one side exhibits a flat surface 6 for connection to the screen 2 and on another side exhibits an inclined surface 5, which progresses obliquely with respect to the plane A-A of the screen 2.

The inclined surface 5 exhibits a base 12 and an apex 13, which apex is located at a higher level than the base 12.

A first pivot 14 is located at the apex 13, which pivot 14 defines a first axis x-x about which the screen 2 can rotate.

The first axis x-x is preferably horizontal and located at a preferably median height of the screen 2.

The first pivot 14 is fractured, preferably at an intermediate portion, by a cavity 15 which enables a positioning of the rest element 7 against the hinge element 3.

The rest element 7, which exhibits a curved surface 8 in contact with the inclined surface 5, can rotate about itself and transmit a corresponding rotation to the screen 2 with respect to the axis x-x of the first pivot 14.

The rest element 7 is defined by a solid of revolution exhibiting a revolution axis y-y and at least a generatrix 16 defining the curved surface 8, in contact with the inclined surface 5.

As can be seen in the figures of the drawings, the rest element 7 is in a preferred embodiment defined by a cone 17 exhibiting an axis of revolution y-y which is vertical, while the geometrical axis z-z of the cone 17 is skewed with respect to the axis of revolution y-y.

Further, the cone 17 exhibits a generatrix 16 which is parallel to the inclined surface 5 and a base 7a and a vertex 7b, which vertex 7b is preferably upwards-facing.

The rest element 7, at the base 7a and vertex 7b thereof respectively exhibits a first cylindrical body 18 and a second cylindrical body 19, each of which has an axis which coincides with the axis of revolution y-y.

Each cylindrical body 18, 19 exhibits a development direction which is as follows: the first cylindrical body 18 from the base 7a towards the outside of the rest element 7, and the second cylindrical body 19 from the vertex 7b towards the outside of the rest element 7.

The second cylindrical body 19 is housed internally of the cavity 15 of the first pivot 14 in order to enable the positioning of the generatrix 16 in contact with the inclined surface 5.

The first cylindrical body 18 is engaged by the elastic means 9.

The elastic means 9 comprise a torsion spring 20 and a collar 21, which enable the rest element 7 to remain stable on the inclined surface 5.

In the absence of elastic means 9 the weight of the screen 2 would favour the rotation of the rest element 7, bringing the screen 2 into the position of maximum inferior inclination with respect to the plane A-A.

The elastic means 9, in particular the spring 20, exert an elastic force which is contrary to the rotation direction of the rest element 7, thus in opposition to the free rotation of the rest element 7 and such as to keep the rest element 7 still on the prismatic body 11, thus also enabling the screen to reach equilibrium in whatever position it has assumed.

At the base 7a of the rest element 7 there is an annular body 25 projecting with respect to the base 7a, in which a recess 22 is cut.

The spring 20, coupled to the first cylindrical body 18, exhibits a second end 20a jointed on the recess 22 of the annular body 15, while the opposite end 20b is anchored on a rotatable collar 21.

The collar 21, being a part of the elastic means 9, enables a calibration of the spring 20, preloading it on the basis of the weight of the screen 2.

In a preferred embodiment illustrated in the figures of the drawings, the support base 10 is defined by a frame 24 exhibiting a pair of horizontal sides 23 and a pair of vertical sides 26.

A first pair of spars 27, each exhibiting a hole 28 for rotation connection with the ends of the first pivot 14, project from the pair of vertical sides 26.

Similarly, a second pair of spars 29 project from the pair of horizontal sides 23, which second pair of spars 29 are shaped as the first pair of spars 27, each exhibiting a hole 28 for connection with ends of the first cylindrical body 18 and the second cylindrical body 19.

At the bottom side of the pair of horizontal sides 23 there is a rod 30 which is connected to the frame 24 in order that the screen 2 can be located in a raised position with respect to the ground.

The rod 30, which is cylindrical, enables the screen 2 to rotate about the geometrical axis of the rod 30.

The device operates as described herein below.

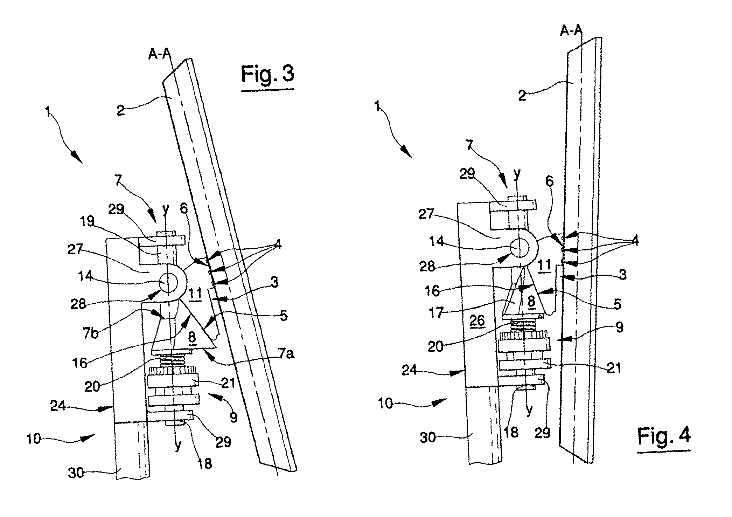

Starting from a rest condition the screen 2 is located in a sub-vertical position (for example, see figure 4).

In the sub-vertical position the screen 2 exerts a tilting couple which is given by the weight of the screen multiplied by the distance between the centre of gravity of the screen 2 and the axis z-z of the first cylindrical pivot.

The tilting couple is contrasted by a reaction couple exerted on the inclined surface 5 of the cone 17.

The lowering of the inclined surface 5 generates a push on the curved surface 8 of the rest element 7 translated thereby into a rotation of the rest element 7 about the axis of revolution y-y.

As mentioned above, in the absence of means for contrasting the torque there would be a rotation at the bottom of the rest element 7 which in turn would cause a rotation of the screen 2 about the axis x-x up until the screen 2 reached the maximum inferior inclination.

By using means for contrasting, i.e. the elastic means 9, with the rotatable collar 21 the spring 20 can be preloaded so that it develops a resistant torque to contrast the tilting couple.

The spring 20 enables equilibrium to be reached between the tilting couple and the resistant torque.

The rest element 7, and in particular the curved surface 8 thereof, is stable on the inclined surface 5 of the prismatic body 11.

A further element guaranteeing safety is the friction which develops among the parts which are in reciprocal contact, i.e. the curved surface 8 which is mobile on the inclined surface 5, the first cylindrical body 18 and the second cylindrical body 19 which are rotatingly mobile in the respective holes 28 in the support base 10 and the ends of the first pivot 14 which are rotationally mobile in the respective holes 28 at the base of the support.

If an inclination of the screen 2 is required with respect to the axis x-x, it is sufficient to push directly on the screen 2 itself.

By pushing, once the static friction between the inclined surface 5 and the curved surface 8 has been overcome, the screen 2 is brought into a second position (figure 3).

The push applied on the screen 2 leads to a rotation, with respect to the axis x-x of the first pivot 14, of the prismatic body 11, which in turn causes the rotation, about the axis of revolution y-y, of the cone 17.

The rotation of the cone 17, i.e. the rest element 7, favours a reduction of stress on the spring 20.

A second state of equilibrium is reached, as in this second position the tilting couple will be reduced.

Obviously, with this configuration, the movement of the screen 2 will be much gentler, avoiding brusque movements between a preceding position and a further position of the screen 2.

A further advantage of the present device is that it offers the option of inclining the screen 2 by acting not on the screen 2 itself but on the rest element 7.

By integrating the means for contrasting with the means for motorised regulation, not represented in the figures of the drawings, which act directly on the rest element 7, it will be possible to obtain a rotation of the screen 2 about the axis x-x without applying any push directly on the screen 2.

The means for regulating can, for example, be a geared transmission keyed on the first pivot 18 of the rest element 7, powered by an electric motor controlled by a normal infra-red remote control unit.

## Claims

1. A support device for a flat screen, comprising:
a flat screen (2) defining a plane (A-A);
a hinge element (3) connected to a back of the flat screen (2) by known
means for connection (4);
a support base (10) connected to the hinge element (3) to enable positioning of the flat screen (2) in a raised position with respect to a floor;
**characterised in that** the hinge element (3) exhibits, opposite to a side thereof connecting with the flat screen (2), an inclined surface (5), being inclined with respect to the plane (A-A), and a first pivot (14) defining an axis (x-x) about which the flat screen (2) can rotate; and **characterised in that** it comprises:
a rest element (7) exhibiting a curved surface (8) in contact with the inclined surface (5) of the hinge element (3), which rest element (7) is free to rotate in order that the flat screen (2) can rotate about the axis (x-x).

2. The support device of claim 1, **characterised in that** it further comprises:
elastic means (9) acting on the rest element (7), which elastic means (9) maintain the rest element (7) in a situation of stability on the inclined surface (5).

3. The support device of claim 1, **characterised in that** the inclined surface (5) exhibits at ends thereof a base (12) and an apex (13), the apex (13) being located at a higher level with respect to the base (12) and being connected to the first pivot (14).

4. The support device of claim 1, **characterised in that** the axis (x-x) is preferably horizontal and located in a median position of the flat screen (2).

5. The support device of claim 1, **characterised in that** the first pivot (14) is fractured, preferably in an intermediate position thereof, by a cavity (15).

6. The support device of claim 1, **characterised in that** the rest element (7) is defined by a solid of revolution which exhibits a revolution axis (y-y) and at least a generatrix (16) in contact with the inclined surface (5).

7. The support device of claim 6, **characterised in that** the rest element (7) is defined by a cone (17) having a revolution axis (y-y) which is vertical, an axis of symmetry (x-x) which is skewed with respect to the revolution axis (y-y), a generatrix which is parallel to the inclined surface (5) and a base (7a) and a vertex (7b), which vertex (7b) is preferably facing in a downwards direction.

8. The support device of claim 7, **characterised in that** the rest element (7) exhibits, respectively at the vertex (7b) thereof and the base (7a) thereof, a first cylindrical body (18) and a second cylindrical body (19), each having an axis which coincides with the axis of revolution (y-y) and a development direction of the vertex (7b), or the base (7a), in an external direction of the rest element (7).

9. The support device of claim 8, **characterised in that** the first cylindrical body (18) is engaged by the elastic means (9).

10. The support device of any one of claims from 5 to 8, **characterised in that** the second cylindrical body (19) is inserted intemally of the cavity (15), positioning the generatrix (16) in contact with the inclined surface (5).

11. The support device of claim 7, **characterised in that** the rest element (7) exhibits, at the base (7b) thereof, an annular body (15) which projects with respect to the base (7b), on which a recess is cut (22).

12. The support device of claim 2, **characterised in that** the elastic means (9) comprise:
a torsion spring (20) coupled on the rest element (7);
a collar (21) which is rotatable on the rest element (7) to enable preloading
of the spring (20).

13. The support device of claim 11 or 12, **characterised in that** the spring (20) is coupled to the first cylindrical body (18), exhibiting a first end (20a) fixed in the recess (22) and a second end (20b) anchored on the collar (21).

14. The support device of claim 1 or 8, **characterised in that** the support base (10), in a preferred embodiment, comprises:
a frame (24) exhibiting a pair of horizontal sides (23) and a pair of vertical sides (26);
a first pair of spars (27) connected respectively on the pair of vertical sides (26), each exhibiting, opposite to the connection side, a hole (28) which is couplable to ends of the first pivot (14);
a second pair of spars (29) connected respectively to the pair of horizontal sides (23), each exhibiting, opposite to the connection side, a hole (28) which is couplable respectively to the first cylindrical body (18) and the second cylindrical body (19);
a cylindrical rod (30) connected to the lower side of the pair of horizontal sides (23) of the frame (24) for enabling rotation of the screen (2) about the axis (y-y).
